# FASCICULE DE BREVET EUROPEEN

(11) **EP 2 229 309 B1**
(45) Date de publication et mention de la délivrance du brevet: **02.01.2013**
(21) Numéro de dépôt: 08870305.3
(22) Date de dépôt: 10.12.2008
(51) Int. Cl.: B62D 67/00, B60K 6/28, H01G 9/08, H01G 2/04, H01M 10/04

(54) **PROCEDE DE DEMONTAGE D'UN DISPOSITIF COMPORTANT AU MOINS UN ARTICLE NOYE AU MOINS PARTIELLEMENT DANS UNE RESINE**
VERFAHREN ZUR DEMONTAGE EINER VORRICHTUNG MIT MINDESTENS EINEM ZUMINDEST TEILWEISE IN HARZ EINGEBETTETEN ARTIKEL
METHOD FOR DISMANTLING A DEVICE INCLUDING AT LEAST ONE ARTICLE AT LEAST PARTIALLY IMBEDDED IN A RESIN

(30) Priorité: 04.01.2008 FR 0850042
(43) Date de publication de la demande: 22.09.2010
(73) Titulaire: Valeo Equipements Electriques Moteur, 94046 Créteil Cedex (FR)
(72) Inventeur: DESSIRIER, Bruno, F-78100 St Germain en Laye (FR); GUERIN, Fabien, F-92320 Chatillon (FR)
(74) Mandataire: de Lambilly Delorme, Marie Pierre
(86) Numéro de dépôt international: PCT/FR2008/052270
(87) Numéro de publication internationale: WO 2009/087323

(56) Documents cités:
- DE-U1- 7 931 680
- JP-A- 2000 182 894
- JP-U- 64 029 871
- US-A- 2 949 182
- US-A1- 2004 136 170

## Description

L'invention concerne notamment un procédé de démontage d'un dispositif comportant au moins un article noyé partiellement dans une résine, ainsi qu'un tel dispositif agencé pour équiper un véhicule automobile.

Il existe un besoin, dans le domaine des véhicules automobiles, pour des dispositifs de stockage d'énergie capables d'être chargés lors de phases de freinage récupératif et déchargés lors de phases de démarrage et d'accélération du véhicule. Des cellules de stockage d'énergie de type super-condensateur ou EDLC (*Electrochemical Double Layer Capacitor* en anglais) sont particulièrement bien adaptées dans la fabrication de ces dispositifs de stockage d'énergie pour véhicules automobiles.

Ces cellules peuvent être disposées dans une cuve en étant partiellement noyées dans une résine thermo-conductrice permettant une dissipation de chaleur efficace. Cette résine sert également au maintien par collage des cellules dans la cuve.

En fin de vie du dispositif de stockage d'énergie, il est procédé au démontage des différents éléments du dispositif en vue d'un traitement de déchets et/ ou d'un recyclage de certains de ces éléments.

Le document US 2004/136170 divulgue un dispositif à condensateur, incluant un condensateur cylindrique en aluminium, un tube composé d'une résine thermorétractable et un support comportant une partie de support cylindrique. Le condensateur est inséré dans le tube thermorétractable, lesquels sont insérés dans une partie du support.

L'invention vise à mieux répondre à des considérations environnementales, notamment en facilitant le démontage, en fin de vie, de dispositifs du type décrit ci-dessus.

L'invention a ainsi pour objet un procédé de démontage d'un dispositif comportant au moins un article noyé au moins partiellement dans une résine, l'article comportant un corps et une enveloppe enveloppant au moins partiellement le corps, l'enveloppe étant au moins partiellement en contact avec la résine, le procédé comportant l'étape consistant à extraire le corps de l'enveloppe, l'enveloppe restant accrochée à la résine lors de l'extraction du corps.

Grâce à l'invention, le corps de l'article noyé partiellement dans la résine peut être retiré aisément car l'interface d'adhérence entre le corps et la résine peut être réduite du fait de la présence de l'enveloppe, laquelle reste accrochée à la résine.

Ainsi les opérations de démontage du dispositif en fin de vie peuvent être simplifiées.

De plus le procédé selon l'invention peut profiter de la présence sur certaines cellules EDLC existantes sur le marché, d'un film enveloppant chaque cellule.

Autrement dit, le procédé selon l'invention peut avantageusement être appliquée à des cellules existantes, sans modification de celles-ci.

Dans un exemple de mise en oeuvre de l'invention, le procédé comporte l'étape consistant à réaliser une découpe de l'enveloppe préalablement à l'extraction du corps de l'enveloppe.

Ceci permet de séparer aisément le corps de l'enveloppe.

La découpe de l'enveloppe peut avantageusement être réalisée suivant au moins une ligne d'affaiblissement préfabriquée de l'enveloppe.

La découpe de l'enveloppe peut être réalisée en séparant une bande reliée au reste de l'enveloppe par des lignes d'affaiblissement préfabriquées.

Dans un exemple de mise en oeuvre de l'invention, le dispositif comporte une cuve et un capot, l'article étant reçu dans la cuve, et l'enveloppe de l'article comporte au moins une portion solidaire du capot, notamment par adhérence par exemple à l'aide d'une colle.

Si on le souhaite, la découpe de l'enveloppe est réalisée en retirant le capot de la cuve.

Dans un autre exemple de mise en oeuvre de l'invention, la découpe de l'enveloppe est réalisée à l'aide d'un outil de coupe tel qu'une lame.

Le cas échéant, l'enveloppe est altérée, notamment par déchirure, seulement lors de l'extraction du corps de l'enveloppe. Ceci peut permettre d'éviter une opération de coupe préalable.

L'invention a également pour objet un dispositif, notamment de stockage d'énergie, notamment agencé pour être embarqué sur un véhicule, comportant :
- une résine, notamment une résine thermo-conductrice,
- un article, noyé au moins partiellement dans la résine notamment une cellule de stockage d'énergie, comprenant un corps et une enveloppe enveloppant au moins partiellement le corps, l'enveloppe étant au moins partiellement en contact avec la résine et comporte au moins une ligne d'affaiblissement mécanique s'étendant en dehors de la résine.

Dans un exemple de mise en oeuvre de l'invention, la ligne d'affaiblissement comporte une succession de perforations dans l'enveloppe.

Le cas échéant, l'enveloppe comporte deux lignes d'affaiblissement parallèles, notamment s'étendant sur toute une longueur de l'article.

Ces lignes définissent notamment une bande de l'enveloppe à retirer préalablement à l'extraction du corps de l'enveloppe.

Dans un autre exemple de mise en oeuvre de l'invention, la ligne d'affaiblissement comporte un fil agencé de manière à ce qu'en tirant sur le fil, ce dernier provoque une découpe de l'enveloppe.

Grâce à l'invention, la découpe préalable de l'enveloppe peut être réalisée de manière particulièrement simple, notamment sans nécessiter d'outil supplémentaire.

Le corps de l'article peut présenter une forme sensiblement cylindrique avec deux faces latérales sensiblement planes et parallèles, et l'enveloppe s'étend au moins partiellement sur l'une au moins des faces.

En faisant recouvrir le plus possible les faces latérales par l'enveloppe, il est possible de réduire le contact entre le corps et la résine, ce qui permet de faciliter encore le retrait du corps.

De préférence, l'enveloppe s'étend sur tout le pourtour du corps.

Dans un exemple de mise en oeuvre de l'invention, l'enveloppe comporte un film plastique, notamment un film plastique thermo-rétractable.

Le film est réalisé par exemple en PVC.

Dans un exemple de mise en oeuvre de l'invention, le dispositif comporte une cuve et un capot, l'article étant reçu dans la cuve, et l'enveloppe de l'article comporte au moins une portion solidaire du capot, notamment par adhérence.

La cellule de stockage d'énergie peut comporter un super-condensateur ou, en variante, une batterie Li-On (Lithium- Ion), Ni-Mh (Nickel- Métal hydrure) ou au Plomb.

La cellule peut comporter un élément de batterie.

Bien entendu, l'invention peut s'appliquer à un article autre qu'une cellule de stockage d'énergie. L'article peut par exemple être un composant mécanique ou électronique enveloppé dans un film plastique et partiellement noyé dans la résine. L'article est par exemple un élément de connexion électrique entre le dispositif et l'extérieur.

L'article peut, le cas échéant, être un composant nécessitant un circuit de traitement spécifique, du type comprenant un produit nocif.

L'invention a encore pour objet un dispositif de stockage d'énergie agencé pour être embarqué sur un véhicule automobile, comportant au moins une cellule de stockage d'énergie reçue dans une cuve et noyée partiellement dans une résine, la cellule comprenant une enveloppe isolante.

L'invention pourra être mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe transversale, un dispositif de stockage d'énergie conforme à un exemple de mise en oeuvre de l'invention,
- la figure 2 représente, schématiquement et partiellement, en coupe longitudinale, une cellule de stockage d'énergie du dispositif de la figure 1,
- la figure 3 illustre, schématiquement et partiellement, en perspective, la cellule de la figure 2,
- la figure 4 représente, schématiquement et partiellement, en vue de côté, une cellule de stockage d'énergie conforme à une variante de mise en oeuvre de l'invention,
- la figure 5 est une vue, schématique et partielle, de la cellule de la figure 3, après découpe de l'enveloppe, et
- les figures 6 à 9 représentent, schématiquement et partiellement, en perspective, des cellules de stockage d'énergie respectivement suivant plusieurs exemples de mise en oeuvre de l'invention.

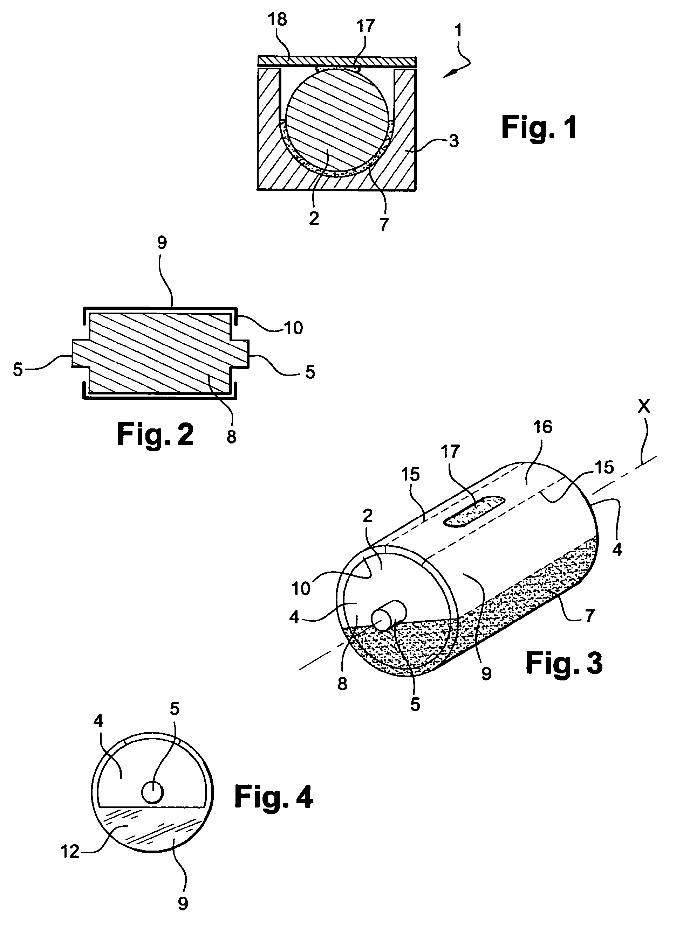

On a représenté sur la figure 1 un dispositif de stockage d'énergie 1 d'un système micro-hybride à alterno-démarreur, non représenté, pour véhicule automobile.

Le cas échéant, le système micro-hybride peut comprendre un système de freinage récupératif.

Le dispositif 1 comporte une pluralité de cellules de stockage d'énergie 2, au nombre de dix dans l'exemple décrit, disposées dans une cuve 3 réalisée par exemple en aluminium.

Ces cellules 2 sont disposées dans une position horizontale et sont reliées en série par des barres de connexion, non représentées.

Chaque cellule 2 comprend un super-condensateur ou EDLC.

Dans l'exemple décrit, chaque cellule 2 présente une forme sensiblement cylindrique de révolution, avec deux faces latérales sensiblement planes 4 en regard, comme illustré sur la figure 3.

Chaque cellule 2 comprend deux bornes de connexion 5 sur les deux faces latérales.

Les cellules 2 sont partiellement noyées dans une résine thermo-conductrice 7, par exemple une résine en polyuréthane permettant de dissiper la chaleur des cellules 2 et maintenir celles-ci dans la cuve 3.

Cette résine 7 peut être choisie pour son aptitude à être recyclée.

La hauteur de la résine 7 dans la cuve 3 est choisie, dans l'exemple décrit, de manière à ce que les cellules 2 soient noyées environ à mi-hauteur, juste en dessous des bornes 5, comme on peut le voir sur la figure 3.

Chaque cellule 2 comporte un corps cylindrique 8 et une enveloppe isolante 9 enveloppant ce corps 8 (voir notamment les figures 2 et 3).

L'enveloppe 9, en matière plastique telle que du PVC, est en contact avec la résine 7 en adhérant à celle-ci.

L'enveloppe 9 s'étend sur tout le pourtour du corps 8, et comprend, à chaque extrémité longitudinale, un rebord annulaire 10 recouvrant une périphérie extérieure de la face latérale 4.

Dans une variante illustrée à la figure 4, l'enveloppe 9 comprend une portion plane 12 recouvrant une partie plus importante des faces latérales 4 des cellules 2. Par exemple, cette portion 12 de l'enveloppe 9 s'étend sur sensiblement toute la partie de la face 4 en dessous de la borne 5.

Dans l'exemple illustré sur la figure 3, l'enveloppe 9 comporte deux lignes d'affaiblissement préfabriquées 15 s'étendant parallèlement à un axe longitudinal X de la cellule 2, sur toute la longueur de celle-ci.

Les lignes d'affaiblissement 15 comportent chacune une succession de perforations permettant de détacher aisément la bande 16 de l'enveloppe 9 délimitée par ces lignes 15.

La séparation de la bande 16 du reste du film 9 peut, si on le souhaite, être réalisée manuellement.

Afin de faciliter les opérations de démontage en fin de vie des cellules 2, il est possible de fixer, par exemple par collage à l'aide d'un adhésif 17, la bande 16 à un capot 18 de fermeture de la cuve 3.

Ainsi, en ouvrant le capot 18, la bande 16 collée à ce capot 18 est séparée du reste de l'enveloppe 9 par rupture des lignes d'affaiblissement 15.

Lorsque plusieurs cellules 2 doivent être retirées, le fait de coller les différentes bandes 16 sur le capot 18 permet avantageusement de séparer ces bandes 16 de manière simultanée lors de l'ouverture du capot 18.

Il est ainsi possible d'éviter des opérations séparées de découpe de d'enveloppe 9.

Le capot 18 est fixé à la cuve 3 par exemple à l'aide de vis, non représentés.

Le collage des enveloppes 9 sur le dessous du capot 18 peut en outre permettre d'améliorer la tenue mécanique des cellules 2 dans la cuve 3.

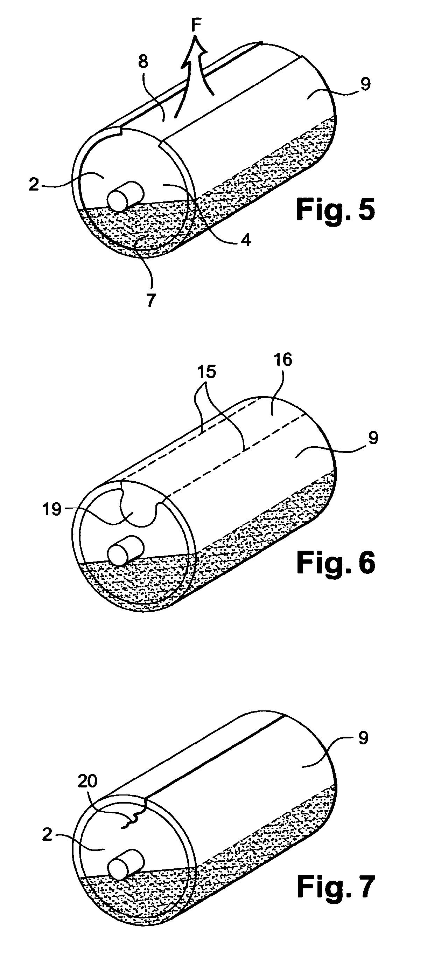

Comme on peut le voir sur la figure 5, après retrait de la bande 16, le corps 8 de la cellule 2 peut être aisément retiré de l'enveloppe 9, en fournissant une force F suffisante pour séparer le corps 8 de l'enveloppe 9 et de la résine 7.

Lorsque les cellules 2 sont reliées entre elles par des barres de connexion, il est possible de retirer toutes ces cellules 2 en même temps, ce qui permet d'éviter, si on le souhaite, d'avoir à retirer ou couper préalablement les barres de connexion.

En variante, il est procédé d'abord à une découpe ou à un retrait des barres de connexion avant de retirer les cellules 2 séparément.

Afin de faciliter le détachement de la bande 16, celle-ci peut être pourvue d'une languette 19 adaptée à la préhension pour un opérateur.

Dans un autre exemple de mise en oeuvre de l'invention illustré à la figure 7, l'enveloppe 9 peut comporter un fil 20 agencé de manière à ce qu'en tirant sur ce fil 20, il est possible de découper l'enveloppe 9.

La ligne parcourue par le fil 20 forme une ligne d'affaiblissement au sens de l'invention.

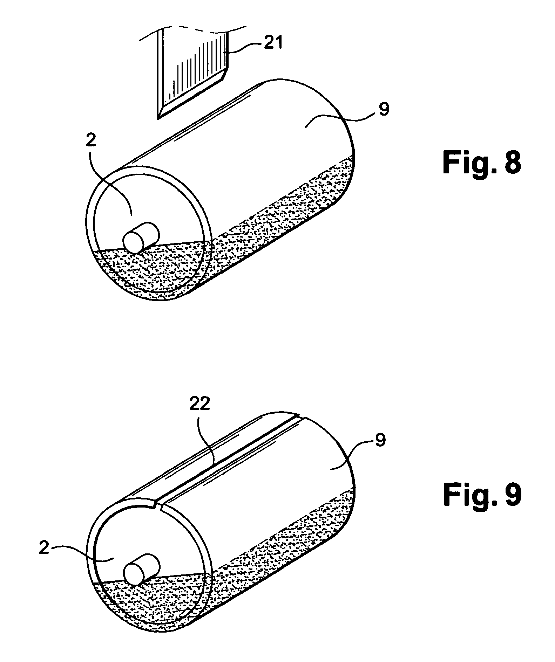

En variante encore, comme illustré sur la figure 8, l'enveloppe 9 est dépourvue de ligne d'affaiblissement préfabriquée.

Afin d'extraire la cellule 2, l'enveloppe 9 est préalablement découpée à l'aide d'un outil de coupe 21 tel qu'une lame.

Dans l'exemple illustré à la figure 9, l'enveloppe 9 comporte une ligne d'affaiblissement 22 formée par une fente s'étendant sur toute la longueur de la cellule.

Une découpe de l'enveloppe 9 n'est donc pas nécessaire pour pouvoir extraire la cellule 2.

La fente 22 est réalisée de manière suffisamment étroite afin que l'enveloppe 9 puisse être correctement maintenue sur le corps 8 de la cellule 2 avant d'être noyée dans la résine 7.

Le cas échéant, un ou plusieurs ponts de matière peuvent être prévus dans la fente 22 pour améliorer le maintien de l'enveloppe 9 autour du corps 8 de la cellule 2.

Bien entendu, l'invention n'est pas limitée aux exemples de mise en oeuvre qui viennent d'être décrits.

Par exemple, l'enveloppe 9 peut présenter une forme choisie de manière à recouvrir sensiblement la totalité des faces latérales 4 des corps 8 des cellules 2.

L'enveloppe 9 peut être formée par un unique film ou, en variante, par au moins deux films en matière plastique.

L'enveloppe 9 peut être réalisée en un matériau électriquement isolant autre qu'un matériau plastique.

Celle-ci peut par exemple comporter un papier.

La cellule 2 peut présenter une forme autre que cylindrique de révolution. Par exemple, l'une au moins des cellules 2 peut présenter une section transversale polygonale telle qu'une section hexagonale ou rectangulaire.

La résine 7 peut, le cas échéant, comporter un adhésif.

Si on le souhaite, la résine peut comporter des additifs pour adapter et améliorer ses caractéristiques thermo-mécaniques, par exemple l'effet colle, la souplesse, la viscosité...

## Revendications

1. Procédé de démontage d'un dispositif (1) comportant au moins un article (2) noyé au moins partiellement dans une résine (7), l'article comportant un corps (8) et une enveloppe (9) enveloppant au moins partiellement le corps, l'enveloppe étant au moins partiellement en contact avec la résine, le procédé comportant l'étape consistant à extraire le corps de l'enveloppe, l'enveloppe restant accrochée à la résine lors de l'extraction du corps.

2. Procédé selon la revendication précédente, **caractérisé par le fait que** le dispositif est un dispositif de stockage d'énergie, notamment pour véhicule automobile, et l'article est une cellule de stockage d'énergie (2), notamment une cellule de type EDLC.

3. Procédé selon l'une des revendications précédentes, comportant l'étape consistant à réaliser une découpe de l'enveloppe (9) préalablement à l'extraction du corps de l'enveloppe.

4. Procédé selon la revendication précédente, **caractérisé par le fait que** la découpe de l'enveloppe est réalisée suivant au moins une ligne d'affaiblissement préfabriquée (15) de l'enveloppe (9).

5. Procédé selon la revendication précédente, **caractérisé par le fait que** la découpe de l'enveloppe est réalisée en séparant une bande (16) reliée au reste de l'enveloppe par des lignes d'affaiblissement préfabriquées (15).

6. Procédé selon l'une des deux revendications précédentes, le dispositif comportant une cuve (3) et un capot (18), l'article étant reçu dans la cuve, **caractérisé par le fait que** l'enveloppe de l'article comporte au moins une portion (16) solidaire du capot, notamment par adhérence, et **par le fait que** la découpe de l'enveloppe est réalisée en retirant le capot de la cuve.

7. Procédé selon la revendication 3, **caractérisé par le fait que** la découpe de l'enveloppe (9) est réalisée à l'aide d'un outil de coupe.

8. Procédé selon l'une des revendications 1 et 2, **caractérisé par le fait que** l'enveloppe est altérée, notamment par déchirure, seulement lors de l'extraction du corps de l'enveloppe.

9. Dispositif (1), notamment de stockage d'énergie, notamment agencé pour être embarqué sur un véhicule, comportant :
- une résine (7), notamment une résine thermo-conductrice,
- un article (2) noyé au moins partiellement dans la résine (7), notamment une cellule de stockage d'énergie, comprenant un corps et une enveloppe enveloppant au moins partiellement le corps, l'enveloppe étant au moins partiellement en contact avec la résine et comporte au moins une ligne d'affaiblissement mécanique s'étendant en dehors de la résine.

10. Dispositif selon la revendication précédente, **caractérisé par le fait que** la ligne d'affaiblissement (15) comporte une succession de perforations dans l'enveloppe.

11. Dispositif selon l'une des deux revendications précédentes, **caractérisé par le fait que** l'enveloppe comporte deux lignes d'affaiblissement (15) parallèles, notamment s'étendant sur toute une longueur de l'article.

12. Dispositif selon la revendication 9, **caractérisé par le fait que** la ligne d'affaiblissement comporte un fil (20) agencé de manière à ce qu'en tirant sur le fil, ce dernier provoque une découpe de l'enveloppe.

13. Dispositif selon l'une quelconque des revendications 9 à 12, le corps présentant une forme sensiblement cylindrique avec deux faces latérales (4) sensiblement planes et parallèles, **caractérisé par le fait que** l'enveloppe s'étend au moins partiellement sur l'une au moins des faces.

14. Dispositif selon l'une quelconque des revendications précédentes, **caractérisé par le fait que** l'enveloppe (9) s'étend sur tout le pourtour du corps.

15. Dispositif selon l'une quelconque des revendications 9 à 14, **caractérisé par le fait que** l'enveloppe comporte un film plastique, notamment un film plastique thermo-rétractable.

16. Dispositif selon l'une quelconque des revendications 9 à 15, **caractérisé par le fait qu'**il comporte une cuve (3) et un capot (18), l'article étant reçu dans la cuve, et **par le fait que** l'enveloppe de l'article comporte au moins une portion solidaire du capot, notamment par adhérence.

## Claims

1. Method for dismantling a device (1) including at least one article (2) at least partially embedded in a resin (7), the article comprising a body (8) and a jacket (9) at least partially jacketing the body, the jacket being at least partially in contact with the resin, the method comprising the step consisting in extracting the body from the jacket, the jacket remaining attached to the resin during the extraction of the body.

2. Method according to the preceding claim, **characterized in that** the device is an energy storage device, notably for a motor vehicle, and the article is an energy storage cell (2), notably a cell of EDLC type.

3. Method according to one of the preceding claims, comprising the step consisting in making a cut in the jacket (9) prior to the extraction of the body from the jacket.

4. Method according to the preceding claim, **characterized in that** the cutting of the jacket is done along at least one prefabricated weakening line (15) of the jacket (9).

5. Method according to the preceding claim, **characterized in that** the cutting of the jacket is done by separating a strip (16) linked to the rest of the jacket by prefabricated weakening lines (15).

6. Method according to one of the two preceding claims, the device comprising a tank (3) and a cap (18), the article being received in the tank, **characterized in that** the jacket of the article comprises at least one portion (16) attached to the cap, notably by adhesion, and **in that** the cutting of the jacket is done by removing the cap from the tank.

7. Method according to Claim 3, **characterized in that** the cutting of the jacket (9) is done using a cutting tool.

8. Method according to one of Claims 1 and 2, **characterized in that** the jacket is altered, notably by tearing, only during the extraction of the body from the jacket.

9. Device (1), notably an energy storage device, notably arranged to be installed on a vehicle, comprising:
- a resin (7), notably a thermoconductive resin,
- an article (2) at least partially embedded in the resin (7), notably an energy storage cell, comprising a body and a jacket at least partially jacketing the body, the jacket being at least partially in contact with the resin and comprising at least one mechanical weakening line extending outside the resin.

10. Device according to the preceding claim, **characterized in that** the weakening line (15) comprises a succession of perforations in the jacket.

11. Device according to one of the two preceding claims, **characterized in that** the jacket comprises two parallel weakening lines (15), notably extending over an entire length of the article.

12. Device according to Claim 9, **characterized in that** the weakening line comprises a filament (20) arranged so that, by pulling on the filament, the latter causes a cutting of the jacket.

13. Device according to any one of Claims 9 to 12, the body having a substantially cylindrical form with two substantially planar and parallel lateral faces (4), **characterized in that** the jacket extends at least partially over at least one of the faces.

14. Device according to any one of the preceding claims, **characterized in that** the jacket (9) extends over the entire circumference of the body.

15. Device according to any one of Claims 9 to 14, **characterized in that** the jacket comprises a plastic film, notably a heat-shrinkable plastic film.

16. Device according to any one of Claims 9 to 15, **characterized in that** it comprises a tank (3) and a cap (18), the article being received in the tank, and **in that** the jacket of the article comprises at least one portion attached to the cap, notably by adhesion.

## Patentansprüche

1. Verfahren zum Zerlegen einer Vorrichtung (1), die mindestens einen Gegenstand (2) aufweist, welcher mindestens teilweise in ein Harz (7) eingebettet ist, wobei der Gegenstand einen Körper (8) und eine Hülle (9) aufweist, welche den Körper mindestens teilweise umhüllt, wobei die Hülle mindestens teilweise mit dem Harz in Kontakt ist, wobei das Verfahren den Schritt umfasst, der darin besteht, den Körper aus der Hülle zu entnehmen, wobei die Hülle beim Entnehmen des Körpers an dem Harz hängenbleibt.

2. Verfahren nach dem vorhergehenden Anspruch, **dadurch gekennzeichnet, dass** es sich bei der Vorrichtung um eine Vorrichtung zum Speichern von Energie, insbesondere für Kraftfahrzeuge, handelt und der Gegenstand eine Energiespeicherzelle (2), insbesondere eine Zelle des Typs EDLC, ist.

3. Verfahren nach einem der vorhergehenden Ansprüche, wobei es den Schritt aufweist, der darin besteht, die Hülle (9) zu zerschneiden, bevor der Körper aus der Hülle entnommen wird.

4. Verfahren nach dem vorhergehenden Anspruch, **dadurch gekennzeichnet, dass** das Zerschneiden der Hülle entlang mindestens einer vorgefertigten Schwächelinie (15) der Hülle (9) erfolgt.

5. Verfahren nach dem vorhergehenden Anspruch, **dadurch gekennzeichnet, dass** das Zerschneiden der Hülle erfolgt, indem ein Streifen (16) abgetrennt wird, der mit dem Rest der Hülle durch vorgefertigte Schwächelinien (15) verbunden ist.

6. Verfahren nach einem der beiden vorhergehenden Ansprüche, wobei die Vorrichtung einen Behälter (3) und eine Abdeckung (18) aufweist, wobei der Gegenstand in dem Behälter aufgenommen ist, **dadurch gekennzeichnet, dass** die Hülle des Gegenstands mindestens einen Abschnitt (16) aufweist, der fest mit der Abdeckung verbunden ist, insbesondere durch Haftkräfte, und dadurch, dass das Zerschneiden der Hülle erfolgt, indem die Abdeckung vom Behälter entfernt wird.

7. Verfahren nach Anspruch 3, **dadurch gekennzeichnet, dass** das Zerschneiden der Hülle (9) mit Hilfe eines Schneidewerkzeugs erfolgt.

8. Verfahren nach einem der Ansprüche 1 und 2, **dadurch gekennzeichnet, dass** die Hülle nur dann beschädigt wird, insbesondere durch Zerreißen, wenn der Körper aus der Hülle entnommen wird.

9. Vorrichtung (1), insbesondere zum Speichern von Energie, welche insbesondere dafür ausgelegt ist, an Bord eines Fahrzeugs mitgeführt zu werden, und Folgendes aufweist:
- ein Harz (7), insbesondere ein wärmeleitendes Harz,
- einen Gegenstand (2), der mindestens teilweise in das Harz (7) eingebettet ist, insbesondere eine Energiespeicherzelle, wobei er einen Körper umfasst sowie eine Hülle, welche den Körper mindestens teilweise umhüllt, wobei die Hülle mindestens teilweise mit dem Harz in Kontakt ist und mindestens eine mechanische Schwächelinie aufweist, die sich außerhalb des Harzes erstreckt.

10. Vorrichtung nach dem vorhergehenden Anspruch, **dadurch gekennzeichnet, dass** die Schwächelinie (15) eine Abfolge von Perforationen in der Hülle aufweist.

11. Vorrichtung nach einem der beiden vorhergehenden Ansprüche, **dadurch gekennzeichnet, dass** die Hülle zwei parallele Schwächelinien (15) aufweist, die sich insbesondere über die gesamte Länge des Gegenstands erstrecken.

12. Vorrichtung nach Anspruch 9, **dadurch gekennzeichnet, dass** die Schwächelinie einen Faden (20) aufweist, welcher derart ausgelegt ist, dass der Faden ein Zerschneiden der Hülle bewirkt, wenn an ihm gezogen wird.

13. Vorrichtung nach einem beliebigen der Ansprüche 9 bis 12, wobei der Körper eine im Wesentlichen zylindrische Form mit zwei Seitenflächen (4) aufweist, die im Wesentlichen eben und parallel sind, **dadurch gekennzeichnet, dass** sich die Hülle mindestens teilweise über mindestens eine der Flächen erstreckt.

14. Vorrichtung nach einem beliebigen der vorhergehenden Ansprüche, **dadurch gekennzeichnet, dass** die Hülle (9) sich über den gesamten Umfang des Körpers erstreckt.

15. Vorrichtung nach einem beliebigen der Ansprüche 9 bis 14, **dadurch gekennzeichnet, dass** die Hülle eine Kunststofffolie aufweist, insbesondere eine Heißschrumpf-Kunststofffolie.

16. Vorrichtung nach einem beliebigen der Ansprüche 9 bis 15, **dadurch gekennzeichnet, dass** sie einen Behälter (3) und eine Abdeckung (18) aufweist, wobei der Gegenstand in dem Behälter aufgenommen ist, und dadurch, dass die Hülle des Gegenstands mindestens einen Abschnitt aufweist, der fest mit der Abdeckung verbunden ist, insbesondere durch Haftkräfte.
